# EUROPÄISCHE PATENTSCHRIFT

(11) **EP 1 336 057 B1**
(45) Veröffentlichungstag und Bekanntmachung des Hinweises auf die Patenterteilung: **10.11.2004**
(21) Anmeldenummer: 00988640.9
(22) Anmeldetag: 24.11.2000
(51) Int. Cl.: F16H 7/02, F16H 55/17, F16G 1/28

(54) **ZAHNRIEMENTRIEBELEMENT**
SYNCHRONOUS DRIVE BELT ELEMENT
ELEMENT DE TRANSMISSION A COURROIE DENTEE

(43) Veröffentlichungstag der Anmeldung: 20.08.2003
(73) Patentinhaber: Bäumler, Peter, 52066 Aachen (DE)
(72) Erfinder: Bäumler, Peter, 52066 Aachen (DE)
(74) Vertreter: Naeven, Ralf, Dr.
(86) Internationale Anmeldenummer: PCT/DE2000/004162
(87) Internationale Veröffentlichungsnummer: WO 2002/042664

(56) Entgegenhaltungen:
- DE-A- 19 520 508
- DE-C- 19 908 672
- US-A- 2 941 413
- US-A- 5 171 190
- PATENT ABSTRACTS OF JAPAN vol. 1998, no. 10, 31. August 1998 (1998-08-31) -& JP 10 141479 A (HONDA MOTOR CO LTD), 29. Mai 1998 (1998-05-29)
- PATENT ABSTRACTS OF JAPAN vol. 010, no. 100 (M-470), 16. April 1986 (1986-04-16) & JP 60 234172 A (FUJI XEROX KK), 20. November 1985 (1985-11-20) in der Anmeldung erwähnt

## Beschreibung

Die Erfindung betrifft einen Zahnriemen mit den Merkmalen des Oberbegriffs von Anspruch 1.

Beim Lauf eines Zahnriementriebs tritt oftmals eine erhebliche Geräuschentwicklung auf, die zum Teil auf das schlagartige Entweichen von Luft aus den Zahnnuten beim Einkämmen der Zähne zurückzuführen ist. Aus der US 2,941,413 ist ein Zahnriementriebelement, konkret ein Zahnriemen, der eingangs genannten Art bekannt. Die durchgehenden Kanäle auf den Zahnköpfen und in den Zahnfüßen erlauben eine Abfuhr der eingefangenen Luft zu den Stirnseiten des Zahnriemens und damit einen geräuschgeminderten Lauf des Zahnriemens.

Aus der JP 60-234172 A2 ist ein Zahnrad bekannt, das allein auf den Zahnköpfen von einer zur anderen Stirnseite durchgehende Kanäle aufweist, die ebenfalls zur Geräuschminderung dienen sollen.

Aus der US 2,988,925 ist ein Zahnriemen bekannt, der allein auf den Zahnköpfen einen oder mehrere Kanäle aufweist.

Der beschriebene Stand der Technik weist allerdings jeweils den Nachteil auf, daß in den Zahnflanken weiterhin die Kontaktflächen weitgehend eben sind. Gerade dort wird zumindest zum größten Teil die Kraft zwischen den miteinander kämmenden Zahnriementriebelementen übertragen und somit auch ein Großteil des Laufgeräuschs erzeugt.

Aus der EP 0 064 576 B1 sind Zahnriemen bekannt, die auf ihrer gesamten Kontaktfläche Vorsprünge aufweisen, um im Lauf eine Dämpfung des Kontakts und damit eine Geräuschminderung zu erreichen. Das Anbringen der Vorsprünge ist allerdings aufwendig und damit kostenintensiv.

Um einen möglichst geräuscharmen Lauf zu erreichen, wird in der DE 39 31 480 C2 vorgeschlagen, an jedem Zahn eines Zahnriemens ein in seine Kopffläche eingebettetes Kopfstück aus einem gegenüber dem Riemenmaterial elastisch weicheren Werkstoff vorzusehen. Hierdurch soll das Auflaufen des Zahnriemens auf das Zahnriemenrad gedämpft werden. Das Aufsetzen dieses elastischen Materials in die Zahnradnut beeinflußt jedoch nicht in erheblicher Weise die Art der Luftverdrängung aus der Zahnradnut, so daß dieser Anteil der Geräuschentwicklung nicht bedeutend gemindert wird.

Schließlich ist aus der US 5,417,617 ein Zahnrad bekannt, das in den Zahnradnuten Luftöffnungen aufweist, durch die die in der Zahnradnut beim Einkämmen eines Zahnkopfes eingefangene Luft entweichen kann. Hierdurch wird lediglich in einem kleinen Bereich der Kontaktfläche eine Maßnahme ergriffen, deren Wirkung für die Geräuschminderung entsprechend eingeschränkt ist.

Es ist nun Aufgabe der vorliegenden Erfindung, einen kostengünstig herstellbaren Zahnriemen zur Verfügung zu stellen, mit dem eine geringere Geräuschentwicklung im Betrieb erreicht werden kann.

Diese Aufgabe wird durch die Merkmale des Anspruchs 1 gelöst.

Die Kanäle in den Zahnflanken erlauben auch dort ein weitgehend ungestörtes Entweichen von Luft und verhindern somit eine verstärkte Geräuschbildung aufgrund einer ansonsten schlagartigen Luftverdrängung. Die Maßnahme ist gerade im Bereich der Zahnflanken wirkungsvoll, da dort die. Kraftübertragung zwischen den miteinander kämmenden Teilen erfolgt, also der Kontakt zwischen den miteinander kämmenden Teilen am intensivsten ist.

Der erfindungsgemäße Zahnriemen kann auch so ausgebildet sein, daß die Kanäle parallel zur Drehachse des Zahnriemens verlaufen. Ein solcher Verlauf der Kanäle kann insbesondere im Falle von Zahnriemen wesentlich einfacher hergestellt werden als ein über die Breite der Kontaktfläche variierender oder schräger Verlauf.

Weiterhin kann der erfindungsgemäße Zahnriemen so ausgebildet sein, daß der Abstand zweier benachbarter Kanäle zueinander in Längsrichtung des Zahnriemens gesehen variiert, höchstens jedoch 1/4 des Abstandes zweier benachbarter Zahnköpfe beträgt. Hierdurch soll ausgeschlossen werden, daß während des Laufs des Zahnriementriebs durch gleichbeabstandete Kanäle möglicherweise ein Resonanzeffekt auftritt, der wiederum zu unerwünschter Geräuschbildung führen könnte.

Weiterhin kann der erfindungsgemäße Zahnriemen so ausgebildet sein, daß die Tiefe und/oder die mittlere Breite der Kanäle variiert, höchstens jedoch 1/4 der Zahnhöhe beträgt.

Der erfindungsgemäße Zahnriemen kann auch so ausgebildet sein, daß die Kanäle durch einen wellenförmigen Verlauf der Kontaktfläche gebildet sind.

Weitere Ausbildungsmöglichkeiten des erfindungsgemäßen Zahnriemens sind schließlich durch die Unteransprüche 6 und 7 gegeben.

Im folgenden werden beispiel- und vorteilhafte Ausbildungsformen des erfindungsgemäßen Zahnriemens anhand von Figuren dargestellt.

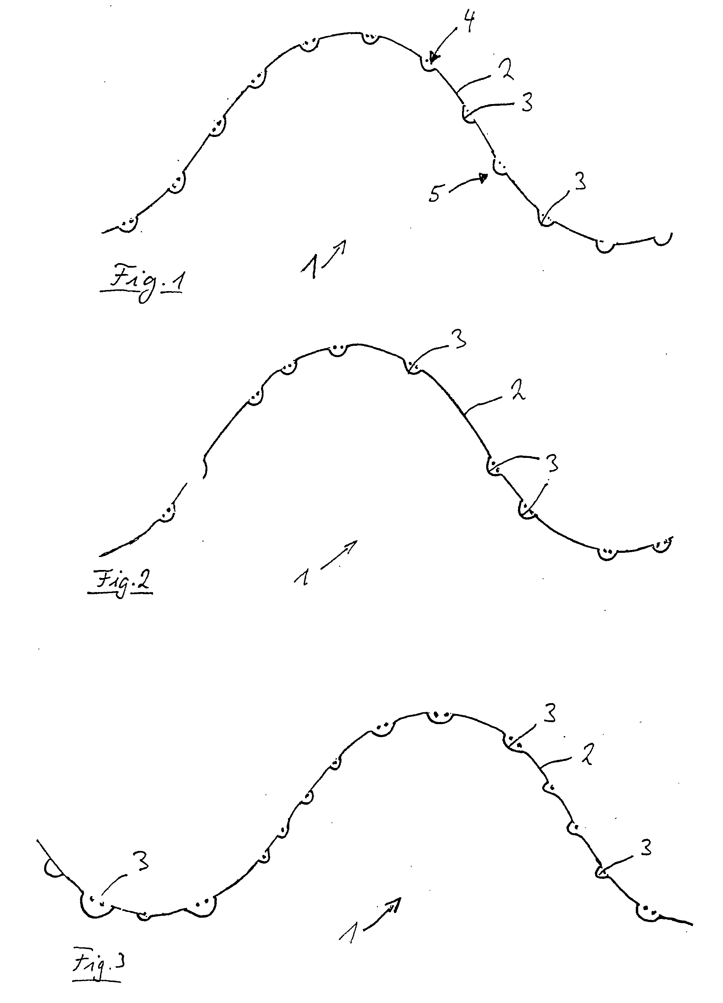

Es zeigen die Fig. 1 bis 6 jeweils schematisch die Kontur eines Zahns eines Zahnriemens mit unterschiedlichen Kanalanordnungen.

Fig. 1 zeigt den Zahn 1 eines Zahnriemens im Querschnitt. Eine Kontaktfläche 2, die im Einsatz des Zahnriemens einem hier nicht dargestellten Zahnriemenrades zugewandt ist, weist Kanäle 3 auf. Die über den Kanälen 3 gezeichneten Punkte deuten das Hauptprofil 4 der Zahnung, das ohne die Kanäle 3 gegeben wäre, an. Die Kanäle 3 verlaufen geradlinig über die gesamte Breite der Kontaktfläche 2. Beim Einkämmen des Zahnes 1 in eine hier nicht dargestellte Zahnnut kann die in der Zahnnut befindliche Luft durch die Kanäle 3 seitlich entweichen.

Fig. 2 entspricht weitgehend Fig. 1. In Fig. 2 weisen die Kanäle 3 jedoch unregelmäßige Abstände zueinander auf. Hierdurch kann vermieden werden, daß durch eine Regelmäßigkeit der Kanalabstände Resonanzeffekte auftreten, die wiederum zu unerwünschter Geräuschbildung führen könnten.

In Fig. 3 weisen die Kanäle 3 neben unregelmäßigen Abständen auch in unregelmäßiger Verteilung unterschiedliche Tiefen und Breiten auf.

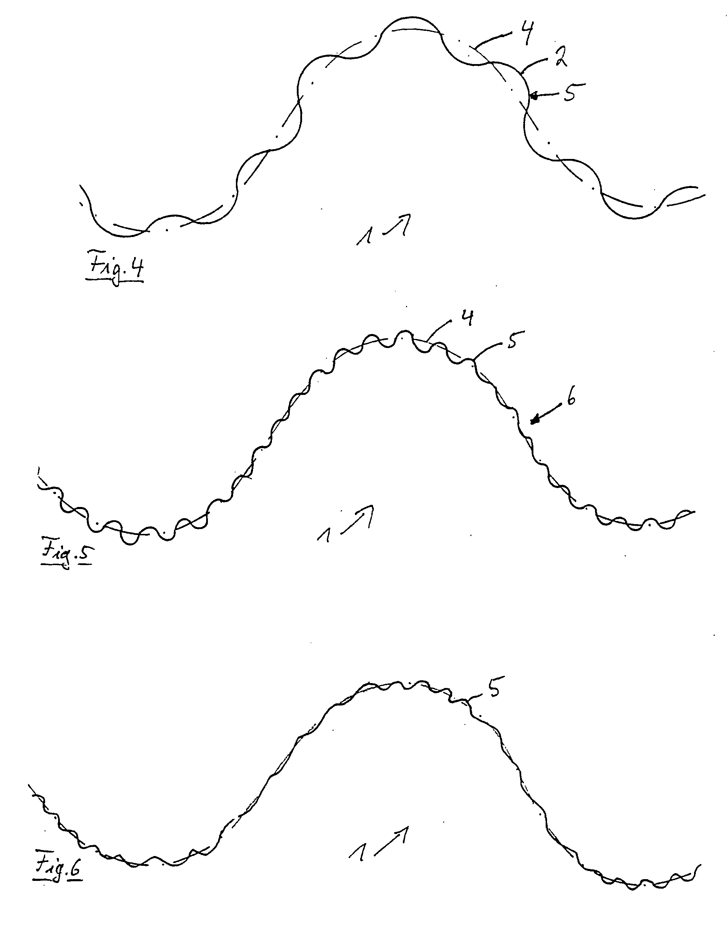

In Fig. 4 ist das Hauptprofil der Zahnung durch eine Strichpunktierung 4 dargestellt. Der höherfrequente tatsächliche Verlauf 5 der Kontaktfläche 2 ist mit durchgezogener Linie gezeichnet. Während das Verhältnis der Wellenlänge des Verlaufs 5 der Kontaktfläche zu der des Hauptprofils 4 in Fig. 4 etwa 1:6 beträgt, ist dieses in Fig. 5 etwa 1:20. Zudem ändert sich im Bereich der Zahnflanken 6 die Wellenform im Vergleich zu der im Bereich des Zahnfußes 7 und der des Zahnkopfes 8. Im Bereich der Zahnflanken 6 ist der Verlauf 5 nahezu treppenförmig, was die Herstellbarkeit des Zahnriemens erleichtern kann, ohne daß hierdurch die Wirksamkeit des gewählten Verlaufs 5 in Frage gestellt ist.

Fig. 6 schließlich zeigt ebenfalls einen wellenförmigen Verlauf 5 der Kontaktfläche, bei dem die Wellenlänge unregelmäßig variiert.

### Bezugszeichenliste

- 1.: Zahn
- 2.: Kontaktfläche
- 3.: Kanal
- 4.: Hauptprofil
- 5.: Verlauf der Kontaktfläche
- 6.: Zahnflanken
- 7.: Zahnfuß
- 8.: Zahnkopf

## Patentansprüche

1. Zahnriemen mit einer Zahnflanken (6), Zahnköpfe (8) und Zahnfüße (7) bildenden Zahnung, wobei die im Einsatz des Zahnriemens der Zahnung eines Zahnriemenrads zugewandte Kontaktfläche (2) der Zahnköpfe (8) und der Zahnfüße (7) offene, geradlinige und jeweils von einer zur anderen Stirnseite des Zahnriemens durchgehende Kanäle (3) aufweist, **dadurch gekennzeichnet, dass** zusätzlich die Kontaktfläche (2) der Zahnflanken mit derartigen Kanälen (3) versehen ist.

2. Zahnriemen nach Anspruch 1, **dadurch gekennzeichnet, daß** die Kanäle (3) parallel zur Drehachse des Zahnriemens verlaufen.

3. Zahnriemen nach Anspruch 1 oder 2, **dadurch gekennzeichnet, daß** der Abstand zweier benachbarter Kanäle (3) zueinander in Längsrichtung des Zahnriemens gesehen variiert, höchstens jedoch 1/4 des Abstandes zweier benachbarter Zahnköpfe (8) beträgt.

4. Zahnriemen nach einem der Ansprüche 1 bis 3, **dadurch gekennzeichnet, daß** die Tiefe und/oder die mittlere Breite der Kanäle (3) variiert, höchstens jedoch 1/4 der Zahnhöhe beträgt.

5. Zahnriemen nach Anspruch 1 oder 2, **dadurch gekennzeichnet, daß** die Kanäle durch einen wellenförmigen Verlauf der Kontaktfläche (2) gebildet sind.

6. Zahnriemen nach Anspruch 5, **dadurch gekennzeichnet, daß** die Wellenlänge des Verlaufs der Kontaktfläche (2) in der Längsrichtung des Zahnriemens gesehen variiert, höchstens jedoch 1/6 des Abstandes zweier benachbarter Zahnköpfe (8) beträgt.

7. Zahnriemen nach Anspruch 3, 4 oder 6, **dadurch gekennzeichnet, daß** eine stochastische Verteilung der variierten Größe in Längsrichtung des Zahnriemens gesehen gegeben ist.

## Claims

1. A toothed belt having a tooth arrangement forming tooth flanks (6), tooth heads (8) and tooth bases (7), wherein the contact surface (2) of tooth heads (8) and tooth bases (7) facing the tooth arrangement of a toothed belt gear when the toothed belt is in use has open, straight channels (3), each of which extends directly from one frontal face of the toothed belt to the other,
**characterised in that**
the contact surface (2) of the tooth flanks is also furnished with channels (3) of such kind.

2. The toothed belt according to claim 1,
**characterised in that**
the channels (3) extend parallel to the axis of rotation of the toothed belt.

3. The toothed belt according to either of claims 1 or 2,
**characterised in that**
the distance between two adjacent channels (3) in the longitudinal direction of the toothed belt varies, but does not exceed 1/4 of the distance between two adjacent tooth tips (8).

4. The toothed belt according to any of claims 1 to 3,
**characterised in that**
the depth and/or the average width of the channels (3) varies, but does not exceed 1/4 the height of the tooth.

5. The toothed belt according to either of claims 1 or 2,
**characterised in that**
the channels are formed by a wave-like course of the contact surface (2).

6. The toothed belt according to claim 5,
**characterised in that**
the wavelength of the course of the contact surface (2) varies in the longitudinal direction of the toothed belt, but does not exceed 1/6 the distance between two adjacent tooth tips (8).

7. The toothed belt according to any of claims 3, 4 or 6,
**characterised in that**
stochastic distribution is applied to the varying size in the longitudinal direction of the toothed belt.

## Revendications

1. Courroie pour pignons dentés portant une denture formant des flancs de dent (6), des têtes de dent (8) et des pieds de dent (7), dans laquelle la surface de contact (2) des têtes de dent (8) et des pieds de dent (7) tournée vers la denture d'une roue de courroie pour pignons dentés lors du fonctionnement de la courroie pour pignons dentés présente des canaux (3) ouverts, en ligne droite et s'étendant respectivement d'une paroi frontale à une autre paroi frontale de la courroie pour pignons dentés, **caractérisée en ce que** la surface de contact (2) des flancs de dent est de plus pourvue de canaux du même type.

2. Courroie pour pignons dentés selon la revendication 1, **caractérisée en ce que** les canaux (3) s'étendent parallèlement à l'axe de rotation de la courroie pour pignons dentés.

3. Courroie pour pignons dentés selon la revendication 1 ou 2, **caractérisée en ce que** la distance entre deux canaux (3) voisins l'un de l'autre, vus dans la direction longitudinale de la courroie pour pignons dentés varie, mais correspond cependant au maximum à 1/4 de la distance entre deux têtes de dent (8) voisines.

4. Courroie pour pignons dentés selon une des revendications 1 à 3, **caractérisée en ce que** la profondeur et/ou la largeur moyenne des canaux (3) varie, mais correspond cependant au maximum à 1/4 de la hauteur de dent.

5. Courroie pour pignons dentés selon la revendication 1 ou 2, **caractérisée en ce que** les canaux (3) sont réalisés au moyen d'un cours ondulé de la surface de contact (2).

6. Courroie pour pignons dentés selon la revendication 5, **caractérisée en ce que** la longueur d'ondes du cours de la surface de contact (2), vue dans la direction longitudinale de la courroie pour pignons dentés varie, mais correspond cependant au maximum à 1/6 de la distance entre deux têtes de dent (8) voisines.

7. Courroie pour pignons dentés selon la revendication 3,4 ou 6, **caractérisée en ce qu'**une répartition stochastique des grandeurs variées, vue dans la direction longitudinale de la courroie pour pignons dentés est donnée.
